# FASCICULE DE BREVET EUROPEEN

(11) **EP 0 942 387 B1**
(45) Date de publication et mention de la délivrance du brevet: **17.05.2006**
(21) Numéro de dépôt: 99400567.6
(22) Date de dépôt: 09.03.1999
(51) Int. Cl.: G06K 7/08, G06K 7/10, G06K 7/00

(54) **Procédé et système de lecture multiple d'un ensemble dynamique d'étiquettes**
Verfahren und System zum mehrmals Lesen einer dynamischen Sammlung von Etiketten
Procedure and system for multiple reading of a dynamic collection of labels

(30) Priorité: 12.03.1998 FR 9803059
(43) Date de publication de la demande: 15.09.1999
(73) Titulaire: COMMISSARIAT A L'ENERGIE ATOMIQUE, 75015 Paris (FR)
(72) Inventeur: Vacherand, Francois, 38800 Le Pont de Claix (FR); Crochon, Elisabeth, 38320 Poisat (FR)
(74) Mandataire: Audier, Philippe André

(56) Documents cités:
- EP-A- 0 585 132
- FR-A- 2 677 135
- US-A- 5 339 073

## Description

### Domaine de l'invention

L'invention concerne un procédé de lecture d'un ensemble dynamique d'étiquettes avec synchronisation des communications entre le dispositif interrogateur (appelé aussi lecteur) et les étiquettes pouvant entrer ou sortir de façon aléatoire du champ électromagnétique émis par le dispositif interrogateur.

L'invention concerne également un système mettant en oeuvre ce procédé.

L'invention s'applique à toutes transactions entre un système interrogateur et des systèmes répondeurs dont on ne connaît, a priori, pas le nombre. En particulier, elle trouve des applications dans le domaine ce la reconnaissance d'individus porteurs de badge, ou dans le domaine de la comptabilisation et du contrôle d'objets porteurs d'étiquettes tels que des bagages dans les aéroports, des marchandises dans un magasin, ou encore des produits dans une chaîne de production.

### Etat de la technique

De nombreux systèmes et procédés d'identification d'objets porteurs d'étiquettes sont actuellement connus de l'homme de l'art. La plupart d'entre eux s'appliquent à une lecture multi-étiquettes.

Certains de ces procédés proposent une réémission du code de l'étiquette après un temps aléatoire propre à chaque étiquette, lorsqu'il y a détection de collision de messages émis simultanément par les étiquettes.

Il existe aussi des procédés qui consistent à laisser une tranche de temps particulière pour la réponse d'une étiquette. Chaque tranche de temps est déterminée de manière univoque par le code d'identification de chaque étiquette. Cependant, ce procédé n'optimise pas le temps de transaction entre le système interrogateur et l'ensemble des étiquettes.

Un autre procédé, adapté uniquement à un ensemble statique d'étiquettes à lire une seule fois, est décrit dans la demande de brevet FR-A-2 677 135. Cette demande de brevet explique comment les étiquettes présentes dans le champ d'interrogation du dispositif interrogateur sont amenées, par le dispositif, à fournir successivement chaque bit du code d'identification jusqu'à ce que celui-ci soit entièrement identifié. Pour cela, les étiquettes réponcent à un signal de commande du dispositif interrogateur ; lorsqu'une étiquette détecte que le code en cours d'identification est différent du sien, elle s'inhibe momentanément (c'est-à-dire qu'elle devient "muette") de sorte que le cycle d'identification continue avec les autres étiquettes jusqu'à ce qu'il ne reste plus qu'une seule étiquette non inhibée. Le code de cette étiquette est alors identifié. En fin de cycle d'identification, sur une seule commande du dispositif interrogateur, l'étiquette identifiée s'inhibe définitivement et les autres étiquettes lèvent leur inhibition momentanée. La procédure d'identification est ensuite réinitialisée pour identifier une autre étiquette. Ces opérations sont répétées jusqu'à ce que toutes les étiquettes aient été identifiées séparément.

Cependant, cette technique ne peut être appliquée qu'à un ensemble statique d'étiquettes, qui ne peuvent être lues qu'une seule fois. Elle ne peut donc pas être appliquée à un ensemble dynamique d'étiquettes, c'est-à-dire à des étiquettes pouvant entrer et sortir de façon aléatoire du champ électromagnétique du dispositif interrogateur.

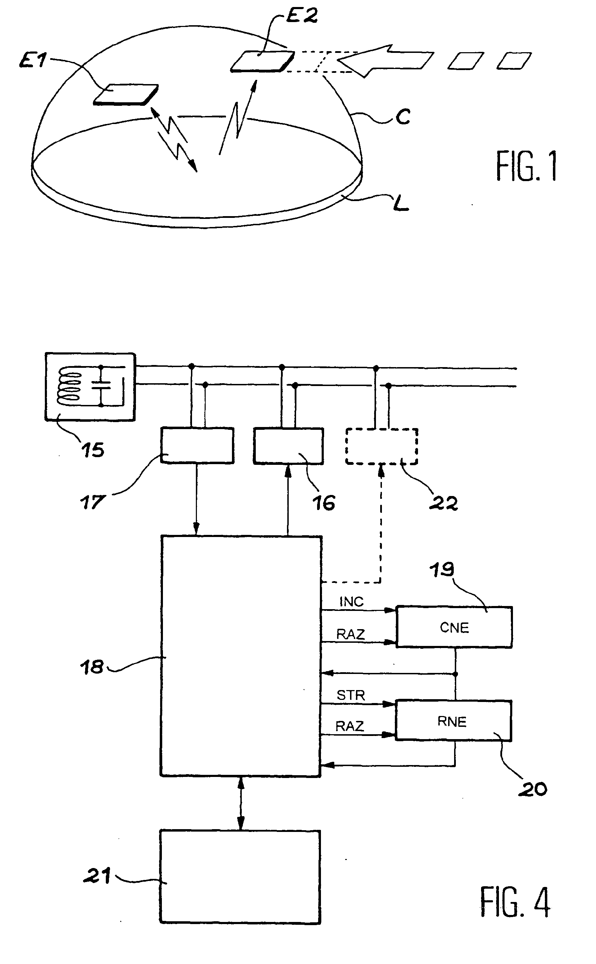

Sur la figure 1, on a représenté, par une demi-sphère, le champ électromagnétique C d'un dispositif interrogateur L en cours de séquence de scrutation, c'est-à-dire en cours d'échange des données binaires avec une étiquette E1 déjà présente dans le champ électromagnétique. On a représenté aussi une étiquette E2 en train d'entrer dans ce champ électromagnétique.

Sur cette figure 1, plusieurs flèches symbolisent les échanges d'informations entre le dispositif interrogateur L et les étiquettes E1 et E2. En particulier, on voit sur cette figure que, au moment de l'entrée de l'étiquette E2 dans le champ électromagnétique, il y a des échanges de données entre l'interrogateur et l'étiquette E1 ; l'étiquette E2 reçoit donc également les messages émis par le dispositif interrogateur L et destiné à l'étiquette E1 déjà présente dans le champ électromagnétique. Dans ce cas, l'étiquette E2 peut répondre à ces messages, comme l'étiquette E1 ; il y a alors risque de confusion dans les informations reçues par le dispositif interrogateur.

Le document US 5 339 073 décrit un équipement de control d'accès comportant une unité d'interrogation qui émet un signal d'interrogation et une pluralité de récepteurs, chaque récepteur comportant un code d'identification propre différent de celui des autres récepteurs. Le signal d'interrogation est transmis simultanément à tous les récepteurs. Une réponse à ce signal est transmise à l'unité d'interrogation par n'importe lequel des récepteurs sans aucune synchronisation.

### Exposé de l'invention

L'invention a justement pour but de remédier aux inconvénients des techniques citées précédemment et d'éviter toute confusion due à l'arrivée d'une étiquette dans un champ interrogateur pendant un cycle de lecture.

A cette fin, elle propose un procédé et un système de lecture d'un ensemble dynamique d'étiquettes pouvant entrer ou sortir de façon aléatoire du champ électromagnétique d'un dispositif interrogateur, alors que le dispositif interrogateur émet des données binaires destinées à une étiquette identifiée auparavent ; autrement dit, le procédé et le système de l'invention permettent de gérer les arrivées asynchrones d'étiquettes pendant un cycle de lecture (ou cycle de scrutation) ou pendant tout échange de données entre le dispositif interrogateur et des étiquettes déjà présentes dans le champ interrogateur.

De façon plus précise, l'invention concerne un procédé de lecture multiple d'un ensemble dynamique d'étiquettes radiofréquence munies chacune d'un code d'identification distinct, chaque étiquette pouvant entrer ou sortir de façon aléatoire d'un champ électromagnétique émis par un dispositif interrogateur pendant une séquence de lecture des codes d'identification. Ce procédé se caractérise par le fait que chaque étiquette (E2) venant d'entrer dans le champ électromagnétique pendant une séquence de lecture des codes a la permission de n'émettre des données qu'après la réception d'une information de synchronisation émise par le dispositif interrogateur.

Selon l'invention, chaque étiquette comporte un code de type caractéristique de l'étiquette, émis par l'étiquette vers le dispositif interrogateur, lorsque ladite étiquette a la permission d'émettre des données.

En fonction du code de type de l'étiquette qu'il reçoit, le dispositif interrogateur va enclencher un protocole d'échanges particuliers avec l'étiquette. Ce code de type doit comporter un bit à 1 pour signifier la présence de l'étiquette correspondante, à l'interrogateur.

Selon un premier mode de réalisation, l'information de synchronisation consiste en au moins un message spécifique émis par le dispositif interrogateur de façon à signifier à la nouvelle étiquette qu'elle peut, dès réception de ce message, émettre des données.

L'interrogateur dispose en effet d'un ensemble de messages codés dont ledit message spécifique. Ces messages correspondent à des ordres ou des données aptes à être transmis vers les étiquettes sans risque de confusion.

Selon un second mode de réalisation de l'invention, l'étiquette entrant dans le champ électromagnétique est dans un état inactif ; l'information de synchronisation consiste alors en un signal émis par le dispositif interrogateur et destiné à mettre l'étiquette dans un état actif, dans lequel elle est apte à recevoir et à émettre des données.

L'invention concerne également un système de lecture multiple d'étiquettes selon la revendication 5.

Les étiquettes du système peuvent comporter:
- une bascule d'invalidation momentanée ; et
- une bascule d'inhibition cyclique.

Selon l'invention, chaque étiquette peut comporter une bascule de sélection d'étiquette (6) permettant un dialogue uniquement entre l'étiquette sélectionnée et le dispositif interrogateur.

Selon le premier mode de réalisation de l'invention, le dispositif interrogateur comporte des moyens de modulation complémentaires destinées à l'émission de messages et les étiquettes comportent chacune des moyens de démodulation de ces messages. Ces messages sont ceux définis précédemment.

### Brève description des figures

- La figure 1 représente schématiquement un exemple de champ électromagnétique dans lequel une nouvelle étiquette vient d'entrer ;
- la figure 2 représente schématiquement le diagramme fonctionnel d'une séquence de lecture avec mise à jour des informations ;
- la figure 3 représente schématiquement l'architecture d'une étiquette ; et
- la figure 4 représente schématiquement l'architecture du dispositif interrogateur.

### Description détaillée de modes de réalisation

Le procédé de l'invention permet justement de lire les codes d'identification d'une pluralité d'étiquettes entrant et sortant de façon asynchrone du champ électromagnétique du lecteur, en synchronisant les communications entre le lecteur et les étiquettes.

En effet, pour qu'il n'y ait pas de risque de confusion au moment de l'entrée d'une nouvelle étiquette dans le champ électromagnétique, il faut que la nouvelle étiquette qui arrive dans le champ électromagnétique pendant une séquence de scrutation n'ait aucune réaction. Le procédé propose deux modes de réalisation :
- premier mode : les données binaires émise par l'interrogateur sont codées avec des motifs de messages n'interférant jamais avec les commandes de l'interrogateur ;
- second mode : les étiquettes, après leur mise sous tension, attendent un signal particulier de la part de l'interrogateur, pour activer leur capacité d'interprétation des messages émis par l'interrogateur. L'invention s'applique seulement au second mode de réalisation.

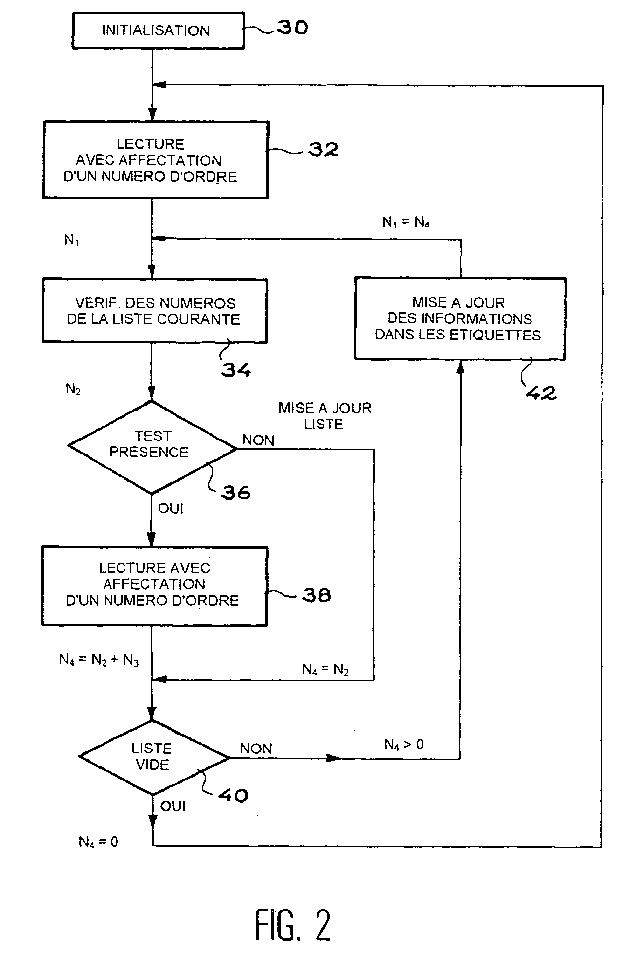

Sur la figure 2, on a représenté schématiquement le diagramme fonctionnel d'une séquence de lecture avec mise à jour d'une pluralité d'étiquettes. Ce diagramme fonctionnel comporte tout d'abord une phase 30 d'initialisation de l'ensemble du système de lecture. Une étape 32 consiste ensuite à appliquer l'algorithme de lecture avec affectation d'un numéro d'ordre, comme cela est décrit de façon plus précise, dans la demande de brevet française déposée ce jour par la demanderesse et intitulée "procédé et système de lecture d'un ensemble dynamique d'étiquettes portant des codes d'identification distincts". Les numéros d'ordres sont alors inscrits sous la forme d'une liste.

Le procédé se poursuit ensuite par une étape 34 de vérification des numéros d'ordre de la liste courante et de gestion de ces numéros d'ordre.

Un test 36 consiste ensuite à vérifier si de nouvelles étiquettes non encore listées sont récemment entrées dans le champ électromagnétique. Si c'est le cas, alors un algorithme de lecture avec affectation d'un numéro d'ordre est effectué à l'étape 38 ; cet algorithme est identique à celui de l'étape 32. A la fin de cette étape, le nombre d'étiquettes N4 présentes à la fin du cycle de mise à jour est égal au nombre N2 d'étiquettes présentes après vérification, plus le nombre N3 d'étiquettes récemment arrivées, moins les étiquettes récemment parties.

S'il s'avère qu'aucune nouvelle étiquette n'a été détectée, alors le nombre N4 d'étiquettes présentes à la fin du cycle de mise à jour est égal au nombre N2 d'étiquettes présentes après vérification.

Le procédé se poursuit ensuite par un test 40 qui consiste à vérifier si la liste contenant toutes les étiquettes identifiées avec leur numéro d'ordre est vide. Si cette liste est vide, alors le nombre N4 d'étiquettes présentes à la fin du cycle de mise à jour est nul et le procédé est repris au début de l'étape 32. Si la liste n'est pas vide, alors le nombre N4 d'étiquettes présentes à la fin du cycle de mise à jour est supérieur à zéro et on effectue une étape 42 de mise à jour des informations dans les étiquettes avec initialisation de la liste (N1 = N4). Le traitement repris ensuite au début de l'étape 34.

La liste des étiquettes présentes dans le champ électromagnétique, établie selon la demande de brevet française intitulée "procédé et système de lecture d'un ensemble dynamique d'étiquettes portant des codes d'identification distincts" et citée précédemment, permet à l'interrogateur de pouvoir sélectionner une parmi les N étiquettes présentes et de dialoguer avec elle. Elle permet aussi une modification des données stockées à bord de la mémoire non-volatile de chaque étiquette ou de mettre à jour des informations d'état ou de type concernant cette étiquette. Le diagramme de la figure 2 montre le cas où la modification des informations se fait dès que la mise à jour de la liste des étiquettes présente est terminée et avant la fin du cycle de mise à jour, comme cela est décrit dans la demande de brevet française déposée au nom de la demanderesse et enregistrée sous le numéro 96-15434.

Selon le premier mode de réalisation, le protocole de sélection d'une étiquette parmi N étiquettes, tel que décrit dans la demande de brevet citée précédemment et intitulée "procédé et système de lecture d'un ensemble dynamique d'étiquettes portant des codes d'identification distincts", repose sur l'ouverture d'un canal de transmission entre le dispositif interrogateur et une étiquette parmi les N étiquettes présentes dans le champ électromagnétique. Avec la commande d'ouverture de canal, l'interrogateur émet l'adresse de l'étiquette. Cette adresse peut être, par exemple, le code d'identification ou le numéro d'ordre de l'étiquette. Le message de début de séquence est ainsi crypté avec les données binaires à envoyer (c'est-à-dire le code d'identification ou le numéro d'ordre).

A réception de ce message, l'étiquette ainsi sélectionnée répond "1" et se met "en écoute".

La communication entre l'interrogateur et l'étiquette se termine par une commande de fin de transaction ; l'étiquette se remet alors en mode d'inhibition de cycle (ou inhibition cyclique), ce qui revient à fermer le canal de transmission.

Dans la suite de la description, on considérera que toutes les étiquettes ont les caractéristiques de base décrites dans les demandes de brevet FR-A-2 677 135 et dans la demande de brevet française déposée ce jour au nom de la demanderesse et intitulée "procédé et système de lecture multiple d'un ensemble d'étiquettes portant des codes d'identification distincts" ; de même, les commandes entre les étiquettes et le dispositif interrogateur sont les mêmes que celles décrites dans ces demandes de brevet.

On utilise donc les commandes de lecture d'un "0" et lecture d'un "1" pour coder bit à bit le mot binaire à envoyer par le dispositif interrogateur.

Par exemple, pour envoyer la commande relative à la sélection de l'étiquette de numéro d'ordre 5, avec une longueur de registrer de numéro d'ordre de 4 bits, on utilise la séquence suivante en commençant par le bit de poids le plus faible : SE L1 L0 L1 L0.

Un autre exemple de message codé comportant des données binaires est le suivant :
EMM L1 L0 L0 L1 ESP L1 L1 L0 L0 L1 L0 L0 L1,
dans lequel le premier bit est le bit le moins significatif, et où la commande EMM signifie "émission d'un mot mémoire" et la commande ESP qui signifie "émission d'un séparateur de paramètre". Cet exemple représente une commande d'écriture dans le mot mémoire 9 de la donnée C9h.

Une telle séquence est bien sûr plus longue à envoyer qu'un simple mot binaire pur ; cependant, on peut utiliser un codage pertinent d'instructions émises par l'interrogateur, ce qui minimise la durée des codes L0 et L1.

Par cette séquence et d'autres séquences de type identique, on gère la synchronisation de l'étiquette arrivant en milieu d'émission dans le champ électromagnétique. En particulier, on peut utiliser des commandes déjà connues telles que le début de cycle de scrutation DC et la fin de cycle de scrutation FC.

Les messages et commandes utilisés dans ce mode de réalisation permettent de réaliser les deux fonctions principales du dispositif interrogateur à savoir :
- lire les codes d'identification contenus dans les étiquettes ; et
- maintenir à jour en permanence la liste des étiquettes présentes dans le champ électromagnétique.

Les commandes de base utilisées dans ce mode de réalisation et destinées à être codées avec les données binaires à transmettre sont les suivantes :
* début de séquence de lecture multiple (DSLM) :
   cette commande de début de séquence de lecture a pour rôle de démarrer la séquence de lecture d'un code parmi n codes non encore lus, avec n ≤ N, où N est le nombre total d'étiquettes. Dans le cas présent, le dispositif interrogateur termine cette séquence de lecture, soit par un message de début de séquence de lecture multiple, soit par un message de lecture de code erronné. Ces deux acquittements permettent de gérer la mise à jour automatique du numéro d'ordre. En ce cui concerne l'étiquette, cet ordre est pris en compte si elle a bien reçu un ordre de "début de comptage" et si elle n'est pas momentanément inhibée jusqu'à la fin du cycle. L'étiquette termine le cycle soit en s'inhibant momentanément, si une étiquette de numéro d'ordre supérieur est en cours de lecture, soit en testant si la transmission complète de son code d'identification vers le dispositif interrogateur a été correcte ou non.
* Lecture code erroné (LCE) :
   ce message de lecture de code erroné est envoyé par le dispositif interrogateur vers les étiquettes dans le cas où une mauvaise transmission aurait perturbé la lecture d'un code. Ce message permet de gérer correctement les bascules d'inhibition des étiquettes ainsi que les compteurs de numéros d'ordre.
* Lecture d'un "0" (L0) :
   ce message de lecture d'un "0" est retourné quand le dernier bit envoyé par les étiquettes est un zéro, pendant l'exécution de deux commandes particulières. Ce message est utilisé par le protocole de lecture multiple ainsi que par le protocole de vérification de la liste.
* Lecture d'un "1" (L1) :
   ce message de lecture d'un "1" est retourné quand le dernier bit envoyé par les étiquettes est un "1", pendant l'exécution de deux commandes particulières. Ce message est utilisé par le protocole de lecture de cycle ainsi que par le protocole de vérification de la liste.
* Début de comptage (DC) :
   la commande de début de comptage permet aux étiquettes d'initialiser leurs compteurs de gestion automatique des numéros d'ordre, puis de prendre en compte certains messages afin d'incrémenter ces compteurs de numéros d'ordre. Cette commande met l'étiquette dans un état actif permanent jusqu'à l'inhibition cyclique de ladite étiquette.
* Fin comptage (FC) :
   la commande de fin de comptage termine le cycle de comptage. Les numéros d'ordre restent alors figés jusqu'au prochain cycle de comptage.
* Lecture simple (LS) :
   la commande de lecture simple active une étiquette afin qu'elle émette, en retour, son code d'identification complet vers le dispositif interrogateur. Cette émission se fait à condition que le bit d'inhibition cyclique ne soit pas activé, c'est-à-dire si l'étiquette n'a pas déjà été lue ou vérifiée pendant le cycle de lecture en cours. Si plusieurs étiquettes sont dans ce cas, alors elles vont émettre simultanément et le dispositif interrogateur verra son code lu erronné par vérification de l'information de calcul cyclique de détection d'erreur CRC (en termes anglosaxons : Cyclic Redundancy Checking). Il pourra réagir en conséquence.
* Test de présence (TP) :
   la commande de test de présence est prise en compte par les étiquettes dont le bit d'inhibition cyclique n'est pas encore actif. Dans ce cas, l'étiquette renvoie un message du type bit à "1" pour indiquer sa présence. L'interrogateur peut ainsi savoir à tout moment du cycle de comptage s'il y a des étiquettes encore non lues, présentes dans son champ interrogateur. Afin de gérer plusieurs types d'étiquettes, l'étiquette émet un code de type (par exemple sur quatre bits) avec, par exemple, toujours le premier bit à 1 afin d'indiquer sa présence. Le dispositif interrogateur réagit en conséquence du code de type lu.
* Début de vérification de la liste (DVL) :
   cette commande demande aux étiquettes qui ont déjà été lues une première fois au moins et qui sont encore présentes dans le champ électromagnétique, de répondre présent à l'appel de leur numéro d'ordre. Cette commande balaye les numéros d'ordre en réémettant un message de lecture d'un "0" ou le lecture d'un "1" après que l'étiquette correspondante au numéro d'ordre courant n'ait pas répondu ou ait répondu par l'émission d'un "1". Ces messages cadencent l'incrémentation automatique du numéro d'ordre, au cours de la vérification du compteur situé à l'intérieur de chaque étiquette qui n'a pas encore répondu. Lorsqu'une étiquette a répondu, elle inhibe son bit de cycle de comptage et mémorise le numéro d'ordre courant qui devient son propre numéro d'ordre.
* Fin de vérification de la liste (FVL) :
   le message de fin de vérification de la liste signifie que le compteur et le registre de numéro d'ordre sont figés.
* Lecture code correct (LCC) :
   ce message indique à l'étiquette qui a envoyé son code que celui-ci a été correctement reçu par le dispositif interrogateur. Il permet de gérer le problème de frontière du champ électromagnétique de l'interrogateur ; il permet aussi aux autres étiquettes non encore lues ou vérifiées de gérer l'incrémentation de leur compteur de numéro d'ordre.

Aux instructions et messages cités précédemment, viennent s'ajouter des messages de commande complémentaires qui permettent l'écriture d'informations binaires dans la mémoire de stockage des étiquettes présentes dans le champ électromagnétique ou qui permettent la lecture de paramètres tels que l'état de l'étiquette ou son type. Ces messages peuvent être :
* Sélection d'une étiquette (SE) :
   ce message indique à une étiquette présente que l'interrogateur veut échanger des données avec elle. Son numéro d'ordre sert d'adresse. Le dispositif interrogateur envoie cette commande SE suivie du numéro d'ordre de l'étiquette à contacter. Ceci correspond en fait à l'ouverture d'un canal. Toute commande ultérieure de lecture/écriture ne sera interprétée que par cette étiquette et ce, jusqu'à sa désélection (ou fermeture du canal). Le message envoyé est alors SE NO, où NO est le numéro d'ordre de l'étiquette à contacter.
* Déselection d'une étiquette (DE) :
   ce message de "désélection d'une étiquette" permet d'indiquer à l'étiquette avec laquelle dialogue l'interrogateur, que le canal de communication va être fermé. Ainsi l'étiquette ne prendra plus en considération les nouvelles commandes de lecture/écriture définies ci-dessous (par exemple : LMM, EMM, LME, etc). Le message envoyé est alors DE NO.
* Lecture d'un mot mémoire (LMM) :
   cette commande permet à l'interrogateur de lire un mot mémoire contenu dans l'étiquette sélectionnée. Elle est suivie par le numéro du mot mémoire que l'interrogateur veut lire. Le message envoyé est alors LMM NMM, où NMM est le numéro du mot mémoire.
* Ecriture d'un mot mémoire (EMM) :
   cette commande permet à l'interrogateur d'écrire un mot mémoire contenu dans l'étiquette sélectionnée. Elle est suivie par le numéro du mot mémoire que l'interrogateur veut lire ainsi que par la valeur du mot mémoire. Le message peut être le suivant : EMM NMM ESP DATA, où ESP est un message de séparation et DATA la valeur des données binaires.
* Lecture mot d'état (LME) :
   cette instruction permet de lire le mot d'état. Ce mot d'état de l'étiquette est constitué par les bits d'état et du registre du numéro d'ordre.
* Lecture code d'identification (LCI) :
   l'instruction de lecture de code d'identification permet de lire le code d'identification de l'étiquette.
* Lecture type d'étiquette (LTE) :
   l'instruction de lecture du type d'étiquette permet de lire le type de l'étiquette en cours d'identification. Le type d'étiquette est défini, par exemple, par un mot de 32 bits et par les champs suivants : la longueur en bits du code d'identification en puissance de 2 ; le mode lecture seule ou lecture/écriture sur un bit ; la longueur du registre de numéro d'ordre en puissance de 2 sur 4 bits ; le nombre de mots mémoire en lecture/écriture sur 8 bits ; la longueur du mot mémoire en nombre de bits sur 8 bits ; et 3 bits de réserve, ou encore la tension du protocole, etc.
* Lecture des compteurs/décompteurs (LCD) :
   cette instruction permet de lire les contenus des compteurs et des décompteurs en vue d'un test.
* Emission d'un séparateur de paramètre (ESP) :
   cette instruction permet de séparer les différents paramètres émis à la suite d'une commande puisque ce sont des suites des messages "L0" et "L1".
* Inhibition définitive d'écriture (IEM) :
   la commande d'inhibition définitive d'écriture dans une zone mémoire permet d'interdire définitivement toute écriture, dans la zone mémoire indiquée, à la suite de cette commande. Le message envoyé peut alors être IEM NMM.

En ce qui concerne les étiquettes, seuls deux types de messages peuvent être émis par lesdites étiquettes :
- un bloc de bits contenant le code d'identification de l'étiquette ; et
- un bit à "1" pour indiquer sa présence ou la présence d'un bit à "1" dans son code, ou aucun message émis si son bit est à "0" (ou si elle est absente).

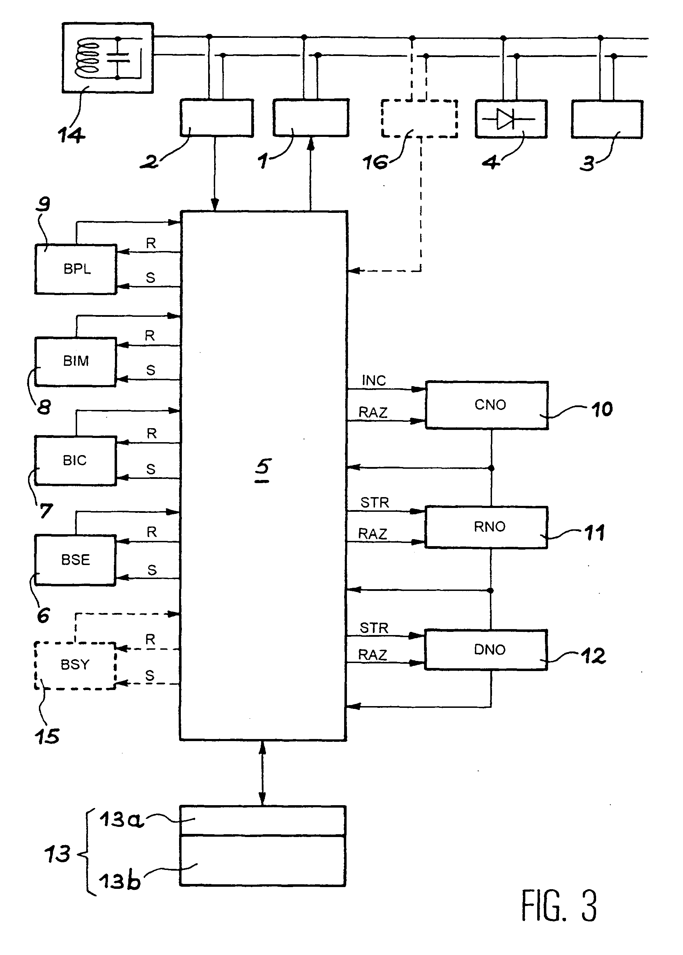

Sur les figures 3 et 4, on a représenté schématiquement le dispositif assurant la mise en oeuvre du procédé qui vient d'être décrit. Pour le premier mode de réalisation qui vient d'être décrit, seuls les éléments représentés en trait plein sont utiles.

Plus précisément, la figure 3 représente l'architecture d'une étiquette.

Chaque étiquette possède des moyens électromagnétiques de transmission 14 ainsi que des moyens électroniques de modulation 1 et des moyens électroniques de démodulation 2 qui lui permettent de communiquer des informations binaires vers le dispositif interrogateur ou bien de recevoir des informations de ce dispositif interrogateur.

Chaque étiquette peut comporter, de plus, des moyens électroniques 4 de récupération d'énergie, ainsi que des moyens électroniques 3 d'extraction d'horloge.

Ces moyens 1, 2, 3, 4 et 14, sont connus de l'homme de l'art et déjà décrits dans la demande de brevet FR-A-2 677 135 ; ils ne seront donc pas décrits de façon plus détaillée dans la présente demande.

Par ailleurs, chaque étiquette comprend des moyens électroniques de séquencement 5 qui lui permettent de séquencer une suite d'actions à entreprendre en fonction des messages reçus du dispositif interrogateur ; elle comporte aussi des moyens de mémorisation 13, organisés en deux zones : une zone de stockage 13a protégée en écriture et réservée au stockage du code d'identification et une zone 13b de sauvegarde d'informations modifiables.

Aux moyens de séquencement tels que, par exemple, ceux décrits dans la demande de brevet française déjà citée et intitulée "procédé et système de lecture multiple d'un ensemble d'étiquettes portant des codes d'identification distincts", appelés par la suite séquenceur, sont connectés différents modules. L'un de ces modules est le compteur de numéros d'ordre CNO, référencé 10, qui s'incrémente chaque fois qu'un nouveau code de poids supérieur se présente, c'est-à-dire chaque fois qu'au moins une autre étiquette répond présent à l'interrogation du dispositif interrogateur, et à condition que l'étiquette n'ait pas encore été interrogée ou bien qu'elle vienne de répondre avec indication d'un bit à "0". Ce compteur de numéros d'ordre CNO est initialisé à zéro en début de séquence de lecture.

Un registre de numéros d'ordre RNO, référencé 11, est également connecté sur le séquenceur 5. Ce registre de numéros d'ordre RNO permet de sauvegarder en mémoire, le numéro d'ordre de l'étiquette telle que calculé lors de la séquence de lecture. Ce numéro d'ordre permet une transaction plus rapide entre l'étiquette et le dispositif interrogateur dans la suite du procédé et, en particulier, dans la séquence de vérification. Ce registre RNO est mis à zéro à l'initialisation de l'étiquette ou en cas d'erreur de lecture du code par le dispositif interrogateur.

Sur ce séquenceur 5, est également connecté un décompteur de numéros d'ordre DNO, référencé 12. Ce décompteur 12 est décrémenté pendant la séquence de recherche du code, autant de fois qu'il y a d'étiquettes en cours de lecture. Ce décompteur 12 est assigné à la valeur du compteur CNO, à chaque début de cycle de scrutation (ou séquence de lecture). Quand sa valeur atteint 1, l'étiquette comprend que c'est à son tour d'émettre le poids du rang de bit courant de son code d'identification. Ce décompteur DNO reste à "0" jusqu'à la fin du cycle de scrutation du rang de bit.

Sur ce séquenceur 5 sont également connectées plusieurs bascules :
- une bascule de première lecture BPL, référencée 9, qui indique à la logique de l'étiquette si elle doit répondre à une commande de lecture de code ou de vérification de présence ;
- une bascule d'invalidation ou d'inhibition momentanée BIM, référencée 8, qui indique l'état de l'étiquette au cours d'une séquence de lecture multiple ;
- une bascule d'inhibition de cycle BIC, référencée 7, qui indique si l'étiquette a déjà été lue et identifiée auparavant dans le cycle en cours ;
- une bascule de sélection d'une étiquette BSE, référencée 6, qui indique si l'étiquette a été sélectionnée pour dialoguer avec l'interrogateur. Cette bascule est active encre les deux commandes "sélection d'une étiquette" (SE) et "désélection d'une étiquette" (DE) concernant cette étiquette. Elle permet, à l'étiquette, de répondre également au jeu de commandes supplémentaires qui ont été décrites précédemment.

Chacun de ces modules échange des informations avec le séquenceur 5. En particulier, chacune des bascules reçoit deux signaux d'entrée de remise à zéro (R) et de mise à 1 (S) ; le compteur de numéro d'ordre reçoit une instruction d'incrémentation (INC) et une instruction de remise à zéro (RAZ) du séquenceur ; le registre de numéros d'ordre 11 et le décompteur de numéros d'ordre 12 reçoivent chacun, du séquenceur, une instruction de mémorisation (STR) et une instruction de remise à zéro (RAZ).

Sur la figure 4, on a représenté schématiquement l'architecture d'un dispositif interrogateur tel qu'utilisé dans l'invention. Ce dispositif interrogateur comprend des moyens électromagnétiques de transmission 15 ainsi que des moyens électroniques de modulation 16 et de démodulation 17 qui lui permettent de communiquer des informations binaires vers l'ensemble des étiquettes, ou bien de recevoir des informations de ces dernières.

Ce dispositif interrogateur comporte, par ailleurs, des moyens électroniques de séquencement 18, appelés aussi séquenceur, qui ont pour rôle de séquencer une suite d'actions à entreprendre en fonction des messages reçus des étiquettes.

Il comporte de plus, des moyens 21 de stockage de la liste des étiquettes présentes dans le champ électromagnétique. Ces moyens de stockage d'informations 21 comprennent, entre autre, une liste des codes en cours de lecture déjà lus. Cette liste des codes en cours de lecture déjà lus est une zone mémoire où le dispositif interrogateur range les codes en cours de lecture ou les codes déjà lus. Ce rangement est dynamique, au sens où une étiquette peut à tout moment quitter le champ de l'interrogateur où y pénétrer. Il est donc possible d'insérer ou de supprimer des éléments (c'est-à-dire des codes) de cette liste.

Le séquenceur 18 est, de plus, relié à un compteur de nombre d'étiquettes CNE, 19, ainsi qu'à un registre de nombre d'étiquettes RNE, 20. Comme montré sur la figure 4, le séquenceur 18 échange des informations avec le compteur du nombre d'étiquettes 19 et le registre du nombre d'étiquettes 20 : le compteur de nombre d'étiquettes 19 reçoit, du séquenceur 18, des instructions d'incrémentation INC et de remise à zéro RAZ; le registre 20 reçoit une instruction de mémorisation STR et une instruction de remise à zéro RAZ, du séquenceur 18.

Le procédé de l'invention, selon le second mode de réalisation, consiste en l'émission, par le dispositif interrogateur, d'un signal de synchronisation destiné à l'étiquette qui vient d'entrer dans le champ interrogateur (ou champ électromagnétique). Ce signal de synchronisation permet d'activer les capacités de l'étiquette à interpréter les messages émis par l'interrogateur. En d'autres termes, un signal de synchronisation est émis chaque fois qu'une commande de lecture, simple ou multiple, est envoyée par le dispositif interrogateur. Ce signal permet de déverrouiller l'interprétation des messages provenant de l'interrogateur par une étiquette récemment téléalimentée, c'est-à-dire une étiquette venant d'entrer dans le champ électromagnétique.

Dans ce mode de réalisation, le processus de synchronisation est un signal, ce qui permet un échange, entre l'interrogateur et les étiquettes, de messages contenant aussi des données en binaire pur ; l'efficacité des échanges, du point de vue du délai de transmission, s'en trouve améliorée.

Avantageusement, ce signal de synchronisation peut être modulé selon les exemples suivants :
* 00K : arrêt momentané de la porteuse, sans pénaliser la téléalimentation.
* PCM : envoi d'un arrêt particulier ("break", en termes anglosaxons).
* FM : émission d'une sous porteuse particulière.
* etc.

Ce second mode de réalisation nécessite des moyens matériels supplémentaires. Ces moyens supplémentaires ont été représentés sur les figures 3 et 4 en pointillés.

Ainsi chaque étiquette, dans ce second mode de réalisation de l'invention, comporte en plus des bascules 6 à 9, une bascule BSY de mémorisation d'un signal de synchronisation. Cette bascule, référencée 15, sert à mémoriser l'état de l'étiquette par rapport à l'autorisation qu'elle a ou pas de répondre aux commandes émises par l'interrogateur.

Cette bascule est à l'état inactif au moment de la mise sous tension de l'électronique de l'étiquette, c'est-à-dire lorsque l'étiquette entre dans le champ électromagnétique. Elle passe à un état actif quand l'étiquette reçoit le signal de synchronisation envoyé par le dispositif interrogateur.

Dans ce mode de réalisation, cet état reste permanent jusqu'à la mise hors tension de l'étiquette, ce qui correspond au retrait de l'étiquette hors du champ de téléalimentation.

Pour ce second mode de réalisation de l'invention, chaque étiquette comporte, de plus, un circuit de démodulation du signal de synchronisation, référencé 16 sur la figure 3.

Dans ce second mode de réalisation, le dispositif interrogateur comporte une fonction de modulation complémentaire, dédiée à l'émission du signal de synchronisation. Cette modulation complémentaire est représentée par le module 22 sur la figure 4.

Le code d'identification doit être suffisamment long pour assurer l'unicité du code associé à chaque étiquette, la longueur de ce code dépendant essentiellement de l'application.

Par ailleurs, il est possible de comptabiliser des étiquettes à longueurs de codes différentes : pour cela l'étiquette doit continuer à émettre des zéros à chaque message "lecture d'un zéro" envoyé par interrogateur, avant la réception d'un code correctement lu ou non. Pour conserver la compatibilité entre code court et code long, il suffit que les étiquettes à code plus long ait un indice "1" dans la partie du code étendu et que les sous-ensembles respectent séparément la règle d'unicité.

## Revendications

1. Procédé de lecture multiple d'un ensemble dynamique d'étiquettes RF munies chacune d'un code d'identification distinct, chaque étiquette pouvant entrer ou sortir de façon aléatoire d'un champ électromagnétique (C) émis par un dispositif interrogateur (L) pendant une séquence de lecture des codes d'identification, **caractérisé en ce que** chaque étiquette (E2) venant d'entrer dans le champ électromagnétique pendant une séquence de lecture des codes a la permission de n'émettre des données qu'après la réception d'une information de synchronisation émise par le dispositif interrogateur.

2. Procédé selon la revendication 1, **caractérisé en ce que** chaque étiquette comporte un code de type caractéristique de l'étiquette, émis par l'étiquette vers le dispositif interrogateur, lorsque ladite étiquette a la permission d'émettre des données.

3. Procédé selon la revendication 1 ou 2, **caractérisé en ce que** l'information de synchronisation consiste en au moins un message spécifique émis par le dispositif interrogateur pour signifier à la nouvelle étiquette qu'elle peut, dès réception de ce message, émettre des données.

4. Procédé selon la revendication 1 ou 2, **caractérisé en ce que** l'étiquette entrant dans le champ électromagnétique étant dans un état inactif, l'information de synchronisation consiste en un signal émis par le dispositif interrogateur et destiné à mettre l'étiquette dans un état actif, dans lequel elle est apte à recevoir des messages et émettre des données.

5. Système de lecture multiple d'étiquettes, le système comportant :
- un dispositif interrogateur comportant un compteur de nombre d'étiquettes (19), un registre de mémorisation de nombre d'étiquettes (20) et des moyens émetteurs/récepteurs (15, 16, 17)
- des étiquettes munies chacune d'un code d'identification et comportant des moyens émetteurs/récepteurs (1, 2, 14),
lesdites étiquettes pouvant entrer ou sortir de façon aléatoire d'un champ électromagnétique (C) émis par le dispositif interrogateur pendant une séquence de lecture des codes d'identification,
**caractérisé en ce que** chaque étiquette comporte une bascule de première lecture (9) permettant la mise à jour du nombre d'étiquettes dans ledit registre de mémorisation du nombre d'étiquettes et une bascule de synchronisation (15) ne permettant l'émission des données de l'étiquettre qu'après la réception d'un signal de synchronisation émis par le dispositif interrogateur.

6. Système selon la revendication 5, **caractérisé en ce que** lesdites étiquettes comportent en outre :
- une bascule d'invalidation momentanée (8 destinée à indiquer l'état de l'étiquette au cours d'une séquence de lecture multiple,
- une bascule d'inhibition cyclique (7) destinée à indiquer si l'étiquette a déjà été lue et identifiée auparavant dans le cycle en cours.

7. Système selon la revendication 5 ou 6, **caractérisé en** en ce que chaque étiquette comporte une bascule de sélection d'étiquette (6) permettant un dialogue uniquement entre l'étiquette sélectionnée et le dispositif interrogateur.

8. Système selon l'une quelconque des revendications 5 à 7, **caractérisé en ce que** le dispositif interrogateur comporte des moyens (22) de modulation complémentaires, destinés à l'émission de messages et **en ce que** les étiquettes comportent chacune des moyens de démodulation (16) de ces messages codés.

## Claims

1. Multiple read method for a dynamic set of RF tags, each having a distinct ID code, each tag being capable of randomly going into and out of an electromagnetic field (C) transmitted by a polling device (L) during an ID code read sequence, **characterized in that** each tag (E2) entering the electromagnetic field during a reading sequence of the codes is authorized to only transmit data following the reception of a synchronization information transmitted by the polling device.

2. Method according to claim 1, **characterized in that** each tag comprises a type code peculiar to the tag, transmitted by the tag to the polling device, when said tag is granted data transmission authorization.

3. Method according to claim 1 or 2, **characterized in that** the synchronization information consists of at least one specific message transmitted by the polling device to inform the new tag that it is allowed to transmit data upon receipt of this message.

4. Method according to claim 1 or 2, **characterized in that** when the tag entering the electromagnetic field is in an inactive state, the synchronization information consists of a signal transmitted by the polling device and meant to place the tag in an active state, where it is capable of receiving messages and transmitting data.

5. Multiple tag read system, said system comprising:
- a polling device comprising a tag number counter (19), a tag number storage register (20), and transmitter/receiver means (15, 16, 17),
- tags, each of which is provided with an identification code and comprising transmitter/receiver means (1, 2, 14),
- said tags being able to enter or leave in a random manner an electromagnetic field (C) transmitted by the polling device during a reading sequence of identification codes,
**characterized in that** each tag comprises a first read latch (9) making it possible to update the number of tags in said tag number storage register and a synchronization latch (15) only permitting the transmission of data from the label following the reception of a synchronization signal transmitted by the polling device.

6. System according to claim 5, **characterized in that** said tags also comprise:
- a temporary disable latch (8) for indicating the state of the tag during a multiple read sequence,
- a cyclic lock latch (7) for indicating whether the tag has already been read and identified beforehand in the cycle taking place.

7. System according to claim 5 or 6, **characterized in that** each tag comprises a tag selection latch (6) allowing a dialog only between the selected tag and the polling device.

8. System according to any one of claims 5 to 7, **characterized in that** the polling device comprises additional modulation means (22) for transmitting messages and **in that** the tags each comprise demodulation means (16) for these encoded messages.

## Patentansprüche

1. Verfahren zum mehrmaligen Lesen einer dynamischen Menge von RF-Etiketten, jede versehen mit einem unterschiedlichen Identifikationscode, wobei jedes Etikett auf zufällige Weise in ein elektromagnetisches Feld (C) eindringen oder es verlassen kann, das von einer Abfragevorrichtung (L) während einer Lesesequenz der Identifikationscodes emittiert wird,
**dadurch gekennzeichnet, dass** jedes Etikett (E2), das während einer Lesesequenz der Codes in das elektromagnetische Feld eindringt, erst nach dem Empfang einer durch die Abfragevorrichtung ausgesandten Synchronisationsinformation die Erlaubnis hat, Daten zu senden.

2. Verfahren nach Anspruch 1, **dadurch gekennzeichnet, dass** jedes Etikett einen Code eines für das Etikett charakteristischen Typs umfasst, den das Etikett der Abfragevorrichtung sendet, wenn das genannte Etikett die Erlaubnis hat, Daten zu senden.

3. Verfahren nach Anspruch 1 oder 2, **dadurch gekennzeichnet, dass** die Synchronisationsinformation aus wenigstens einer spezifischen Mitteilung besteht, welche die Abfragevorrichtung aussendet, um dem neuen Etikett mitzuteilen, dass es nach dem Empfang dieser Mitteilung Daten senden kann.

4. Verfahren nach Anspruch 1 oder 2, **dadurch gekennzeichnet, dass** sich das in das elektromagnetische Feld eindringende Etikett in einem inaktiven Zustand befindet und die Synchronisationsinformation durch ein Signal gebildet wird, das durch die Abfragevorrichtung gesendet wird und dazu dient, das Etikett in einen aktiven Zustand zu versetzen in dem es fähig ist, Mitteilungen zu empfangen und Daten zu senden.

5. System zum mehrmaligen Lesen von Etiketten, wobei dieses System umfasst:
- eine Abfragevorrichtung mit einem Etikettenzahl-Zähler (19), einem Etikettenzahl-Speicherregister (20) und Sende-Empfangseinrichtungen (15, 16, 17),
- Etiketten, von denen jedes einen Identifikationscode und Sende-Empfangseinrichtungen (1, 2, 14) umfasst,
wobei die Etiketten auf zufällige Weise in ein elektromagnetisches Feld (C) eindringen oder es verlassen können, das von einer Abfragevorrichtung während einer Lesesequenz der Identifikationscodes emittiert wird,
**dadurch gekennzeichnet, dass** jedes Etikett eine Erstlektüre-Kippschaltung (9), die eine Aktualisierung der Etikettenzahl in dem genannten Etikettenzahl-Speicherregister ermöglicht, und eine Synchronisationskippschaltung (15) umfasst, die das Senden der Daten des Etiketts nur nach dem Empfang eines durch die Abfragevorrichtung gesendeten Synchronisationssignals zulässt.

6. System nach Anspruch 5, **dadurch gekennzeichnet, dass** die genannten Etiketten außerdem umfassen:
- eine momentane Invalidierungskippschaltung (8), die dazu dient, den Zustand des Etiketts im Laufe einer Mehrmalslesesequenz anzugeben,
- eine zyklische Sperrkippschaltung (7), die dazu dient, anzugeben, ob das Etikett in dem laufenden Zyklus schon vorher gelesen worden ist.

7. System nach Anspruch 5 oder 6, **dadurch gekennzeichnet, dass** jedes Etikett eine Etikettenselektions-Kippschaltung (6) umfasst, die einen Dialog nur zwischen dem selektierten Etikett und der Abfragevorrichtung ermöglicht.

8. System nach einem der Ansprüche 5 bis 7, **dadurch gekennzeichnet, dass** die Abfragevorrichtung zusätzliche Modulationseinrichtungen (22) umfasst, die zum Senden von Mitteilungen dienen, und **dadurch**, dass alle Etiketten Demodulationseinrichtungen (16) dieser codierten Mitteilungen umfassen.
